# EUROPEAN PATENT APPLICATION

(11) **EP 1 524 090 A1**
(43) Date of publication of application: **20.04.2005**
(21) Application number: 03023249.0
(22) Date of filing: 14.10.2003
(51) Int. Cl.: B29B 9/08, C09J 101/00, C09J 103/00

(54) **Water redispersible adhesives and binders and tablets thereof**

(71) Applicant: National Starch and Chemical Investment Holding Corporation, New Castle, Delaware 19720 (US)
(72) Inventor: Magnin, Christophe, 69009 Lyon (FR)
(74) Representative: Held, Stephan, Dipl.-Chem. Dr.rer.nat.

(57) **Abstract**

The present invention relates to redispersible polymer powder adhesives and binders. The powder adhesives and binders can be formed into tablets to take advantage of easier handling. The redispersed powders and tablets are useful as aqueous adhesives and binders. They are especially useful in processes for adhering paper, paperboard, and plastics to substrates, and in paper converting operations.

## Description

### FIELD OF THE INVENTION

This invention relates to polymer powder adhesives and binders that are readily redispersible in cold water. The powders may be presented in the form of a tablet to improve handling. Once the powder or tablet has been redispersed in water to form a stable dispersion, the dispersion may be used in many applications. The dispersions are especially useful in binding paper, paperboard, and plastic to substrates.

### BACKGROUND OF THE INVENTION

Adhesives and binders are used in many industries to hold substrates together. These adhesives and binders are often applied in a liquid form - as a dispersion or solution. Due to environmental concerns, aqueous dispersions and solutions are preferred over organic-solvent based formulations. The adhesive or binder can be supplied in an aqueous form that is either ready-to-use, or as a concentrate that may be diluted to the desired solids or viscosity for the intended application.

Powdered adhesives and binders offer advantages over the liquids in several aspects. Powders are easier and cheaper to ship, and require less storage space. They do not suffer from freeze-thaw concerns, and have increased shelf life. Since there is no aqueous phase, there is no microbial growth, and therefore no need to add preservatives. The absence of preservatives makes powdered adhesives especially attractive for use in tobacco products and food contact applications.

Most powdered adhesives are either applied as powders and cured, such as described in U.S. Patent Numbers 6,136,732 and 5,371,168, or are suspended in an organic solvent, such as described in U.S. Patent Number 5,354,609. U.S. Patent Number 6,316,088 discloses powdered hot-melt adhesives dispersed in water with alkali-thickeners for application to a substrate. U.S. Patent Number 6,127,483 describes a redispersible ethylene vinyl acetate powder for use in cement-containing compositions and paint and coating compositions. U.S. Patent Number 6,316,088 describes hot-melt adhesive powders that are either spread on a sheet as powders, or are made into aqueous dispersions for application to sheets. U.S. Patent Number 5,932,647 describes a water dispersible vinyl acetate-based powder wood glue. None of the references describe redispersible powder adhesives that are useful in paper and paperboard applications.

Powdered adhesives have disadvantages in that they tend to clump-up or agglomerate upon dissolution, and therefore require more time and attention during the dissolution process. U.S. Patent Number 6,361,799 for powdered laxatives discloses a solution to the clumping problem by coating the powder with surfactant. However, surfactants can have detrimental effects in powders used as adhesives and binders. Powders also present a danger of dust explosions.

The disadvantages of powdered materials can be overcome by compressing the powder into tablets. Tablets are commonly used in the pharmaceutical industry. Tablets are also commonly used for delivery of detergents for laundry and automatic dishwashing applications.

Dry adhesives have been presented in a tablet form. U.S. Patent Number 5,698,152 discloses a resin in tablet form which is heated to seal a semi-conductor element. U.S. Patent Number 6,063,404 describes a pharmaceutical bioadhesive tablet that temporarily adheres to biological tissue while it releases an active ingredient. The adhesives in these applications are not water-redispersible.

There is a need for water redispersible powder adhesives or binders for use in paper and paperboard applications. There is also a need for a redispersible tablet form that can easily dissolve in water, to take advantage of the properties of a dry powder, yet overcome the problems associated with current powder adhesives.

It has been found that stable adhesive dispersions can be dried into a powder and then redispersed to form stable dispersions. These powder adhesives can be formed into tablets under the proper conditions, and the tablets are easily dispersed in cold water (25°C) using standard processor dilution equipment. The solution or dispersion formed is free of lumps or gels. An added advantage to tablets is that the required dosage is pre-measured- eliminating measurement of loose powders during the end-use operation.

### SUMMARY OF THE INVENTION

The present invention is directed to redispersible polymer powder adhesives and binders. The powder adhesives and binders can be formed into tablets to take advantage of easier handling. The redispersed powders and tablets are useful as aqueous adhesives and binders, and especially useful for adhering paper, paperboard, and plastics to substrates.

### DETAILED DESCRIPTION OF THE INVENTION

The present invention relates to powder adhesives and binders that are readily redispersible in cold water. The powder can be made into a tablet form.

By "redispersible", as used herein, is meant that the powder or tablet will be completely dispersed in room temperature water of 25°C with gentle stirring within one hour, in forming a 50 percent by weight dispersion. Many other concentrations are of course possible as defined herein.

Powdered adhesives and binders of the present invention include adhesive dispersions which can be dried, then redispersed in water to form a stable dispersion. The powder may be a dried polymer alone, a mixture of polymers, or an adhesive or binder formulation containing polymer plus other ingredients that have been dried separately then blended with the polymer, or blended with the polymer dispersion prior to drying.

Polymers useful in the present invention may be a single polymer, or a mixture of two or more polymers. They may be natural polymers such as polysaccharides, synthetic polymers, or a mixture thereof. The polymers may include reactive polymer systems in the dry form, which do not react until dispersed in water, generally just prior to use. The dry reactive polymers could be mixed together, or may be formed into a two-part tablet to minimize potential interactions. Useful polysaccharide polymers would include starches, both modified and unmodified; cellulosics such as methylcellulose and ethyl cellulose; dextrins; and glycogen. Useful synthetic polymers, copolymers and terpolymers are those known in the art of adhesives and binders. These include, but are not limited to, polymers formed from (meth)acrylates, maleates, (meth)acrylamides, vinyl esters, itaconates, styrenics, unsaturated hydrocarbons including ethylene, acrylonitrile, nitrogen functional monomers, alcohol functional monomers, carboxylic acids, and mixtures thereof. Particularly preferred adhesives and binders include cellulosics; vinyl ester homopolymers and copolymers such as vinyl acetate, ethylene/vinyl acetate, and polyvinyl alcohols; and acrylic polymers.

The synthetic polymers may be synthesized by means known in the art, including solution, suspension, emulsion, mini-emulsion, micro-emulsion, and precipitation polymerization. The polymers may be block or random polymers, and have any polymer architecture. The polymer must be useful as an adhesive or binder. Preferably the polymers have a Tg in the range of -40°C to +50°C, though the Tg of the final formulation can be modified to this range by use of tackifiers and other additives.

The adhesive or binder may be dried into a powder by known processes. These include spray-drying, freeze-drying, drum drying, or fluidized bed drying. A preferred method of forming the powder is by spray drying. It is envisioned that a synthetic emulsion or dispersion polymer could be blended with a solution of a water-soluble polymer such as polyvinyl alcohol, and the blend spraydried into a powder. The polymer powder may be composed of either a component of the adhesive or binder formulation, or it may be a formulated adhesive or binder including a polymer and typical additives. A formulated adhesive or binder may include a number of adjuvants including surfactants which may aid in redispersion; anti-blocking aids and fillers such as aluminum silicates, kaolin, talc, diatomaceous earth, calcium carbonate, and magnesium hydrosilicate; hardeners; pigments; dyes; reinforcing agents such as fibers of plastic or glass, carbon, graphite, colloids, plasticizers, crosslinkers, and rheology modifiers. The adjuvants may be added to the aqueous polymer dispersion followed by drying into a powder, or the dried adjuvants may be blended with the powder-form polymer(s) prior to conversion into a tablet form. Tablets and powders for use as adhesives will be at least 10 percent by weight, preferably at least 50 percent, and more preferably at least 75 percent by weight polymer or a mixture of polymers, depending on the end-use. Tablets and powders for use as binders and coatings may contain lower levels of polymer and more pigment, as long as they contain at least 20 weight percent of the polymer.

The tablet-form adhesive or binder is formed from a powder by means known in the art, such as in a tableting machine or tablet press. The tablet will take on the size and shape of the forming mold. In one preferred embodiment the powder is pressed for less than a second at a specified pressure, and the tablet extracted and packaged. The pressure applied is preferably from 2 to 15 MPa. It has been found that tablets compressed at 2 MPa provide excellent redispersion, yet can suffer some brakage during transport. Tablets formed at 10 to 15 MPa tend to be very stiff and resistant to damage during transport and handling, yet may require more time for redispersion. Preferably the tablets are formed at from 4 to 7 MPa to obtain the best balance of redispersibility and integrity during transport. While the tablets could be of any size practical to form end-use quantities of adhesive or binder, preferred tablet sizes are between 2 grams and 1,000 grams, most preferably from 20 to 500 grams. This size is convenient to produce 10 to 100 liters of adhesive dispersion, such as a 500 gram tablet in 100 liters of water to yield a 0.5 percent adhesive dispersion.

Tablet form adhesives and binders have several advantages over liquid and powder adhesives. They are easily transported and take up less storage space than liquids. Since the adhesive/binders are not in an aqueous form, there is no microbial contamination, and no preservatives are required. One advantage tablets over a powders is that it takes less time to dissolve a tablet. While not being bound by any particular theory, it has been observed that fine powders tend to agglomerate and form lumps and gels during the first minutes of agitation. Tablets also eliminate the danger of dust explosions. Additionaly, tablets are pre-measured, providing for quick and accurate addition to a dilution tank. Tableted adhesives and binders are also practical for low-volume users.

The powders and tablets of the invention can be easily redispersed in cold and room temperature water to form a stable dispersion at a desired level of solids/viscosity, then pumped to the application site, and applied to substrates by means known in the art - such as immersion, spraying, foam, brushing, jetting, or from rollers. The powders and tablets can be redispersed in a mixing vessel. During mixing, additional adjuvants may be blended with the dispersion to produce an adhesive or binder formulation. These adjuvants may be liquids or dispersible solids. In the case of powders, the powder and water can be mixed in an innovative mixing head to form the desired adhesive dispersion. In this case the powder must disperse almost instantaneously in the water to form a dispersion.

One of skill in the art can envision many applications that could benefit from the use of the powder and tablet-form adhesives and binders of the invention. A typical process for using the powder or tablet adhesive would be to redisperse said powder of tablet(s) into water just prior to use, forming a stable polymer dispersion. The dispersion would be applied to a substrate, and that substrate brought in contact with a second substrate which could be the same as the first substrate. The aqueous dispersion would then be dried by known means, such as by absorption of the water into the substrate, or by employing air-drying, forced air drying, heated air-drying, an oven, microwaves, UV radiation, IR radiation, or a mixture thereof.

The dry form adhesives, either powder or tablet, will form useful dispersions that could be used on porous and non-porous substrates, including but not limited to wood, paper, leather, metal, glass, ceramics, concrete, fabric, textiles, plastics, vinyl, carpet, paper, cardboard, upholstery, and non-wovens. Binders formed from the powders and tablets of the invention could be used to bind glass fibers, non-wovens, and paper-making. The redispersed polymers could also be used to apply a protective finish to surfaces, such as textiles surfaces. They may also be used for paper-coating. Powders forming clear films could be used as replacements for thin plastic films useful as protective layers. When applied to printed substrates, the polymer dispersion could replace varnishes and UV varnishes.

Some specific applications include tobacco applications in which the absence of preservatives is a big advantage. The same preservative-free formulations are useful in other regulated applications such as in paper and paperboard for food-contact. The adhesive dispersions formed from the dry powders and tablets are useful in beverage applications where space is limited, or where the application may be low-volume.

In tissue tail and heel applications, where the adhesive is applied at low solids levels of from 0.5 to 7 percent, pre-measured tablets can save time and labor costs. Dispersions of tablet and powder adhesives are useful in paper converting operations - the processes to form paper and paper board into useful articles such as envelopes, packaging, corrugated board, paper bags and sacks, and book binding. The dispersion could be used to produce adhere plastics to paper-such as in forming flexible laminating, or for envelopes with plastic windows.

The following examples are presented to further illustrate and explain the present invention and should not be taken as limiting in any regard.

### Example 1

A 48 g of methyl-cellulose powder (Walocel 40,000, 2%) was formed into a tablet in a tablet press at 3 MPa. The tablet was added to 5 liters of water at 25°C and dissolved in 2 to 3 minutes with manual agitation. The viscosity of the solution reached 1600 mPas in 10 minutes after dissolution. The viscosity was measured with a Brookfield viscometer RTV, spindle Number 4 at 20 rpm.

### Example 2

A 50 g tablet of methyl-cellulose adhesive was formed in a tablet press at 4 MPa. The tablet was added to 5 liters of water at 18°C. The tablet dissolved in 7 minutes with an agitation of 500 rpm. The viscosity of the 1 percent solids solution was 2100 mPas 10 minutes after dissolution.

### Example 3

A 50 g tablet of methyl-cellulose adhesive was formed in a tablet press at 5 MPa. The tablet was added to 5 liters of water at 18°C. The tablet dissolved in 12 minutes with an agitation of 500 rpm. The viscosity of the 1 percent solids solution was 2500 mPas after 10 minutes after dissolution.

### Example 4

A 50 g tablet of methyl-cellulose adhesive was formed in a tablet press at 5 MPa. The tablet was added to 10 liters of water at 18°C. The tablet dissolved in 12 minutes with an agitation of 500 rpm. The viscosity of the 0.5 percent solids solution was 200 mPas after 10 minutes after dissolution.

### Example 5

A 50 g tablet of methyl-cellulose adhesive was formed in a tablet press at 10 MPa. The tablet was added to 10 liters of water at 18°C. The tablet-dissolved in 31 minutes with an agitation of 500 rpm. The viscosity of the 0.5 percent solids solution was 190 mPas after 10 minutes after dissolution.

### Example 6 Tail seal testing

For tissue and towel rolls a liquid adhesive must disappear into the tissue and give hold but not bonding, so that one can open the roll without destroying more than one or two layers.

Each of the solutions from Examples 1 - 5 contained no lumps or undispersed portions. The final solution/dispersion was clear. Each dispersion was applied to the last sheet of a tissue, then rolled on a flat surface to allow contact with the rest of the roll. The adhesive is then allowed to dry. The tissue roll is then hand peeled to ascertain whether the adhesive removes from the tissue roll with or without fiber tears. If no fiber tears, the result is considered good/excellent. All test carried out with the dispersed adhesives of Examples 1-5 gave very good release properties, without fiber tears, very little penetration through the plies, and no bonding on 100% recycled or 100% pure (toilet and towel), and on regular (toilet) and through-air-dried (TAD) (towel) tissue rolls.

### Example 7

A synthetic polymer, such as an ethylene-vinyl acetate, or polyvinyl acetate polymer would be first spray dried into a powder. The powder would then be formed into 2 gram tablets using 11 Kp, ca 100 Newton pressure. Ten of these 2 gram tablets would be added one by one into 30 grams of 18°C water. After each tablet addition, the solution is agitated for 2 minutes at 1200 rpm prior to the addition of any new tablet. It is expected that the tablets would be fully dissolved within 60 minutes forming a homogeneous dispersion.

## Claims

1. A tablet-form adhesive or binder comprising a polymer powder which has been formed into a tablet, and wherein said tablet is redispersible in 25°C water to form a stable adhesive or binder dispersion.

2. The tablet-form adhesive or binder of claim 1 wherein said tablet comprises from 10 to 100 percent by weight of one or more polymers.

3. The tablet-form adhesive or binder of claim 1 wherein said polymer comprises one or more natural polymers, one or more synthetic polymers, or a mixture thereof.

4. The tablet-form adhesive or binder of claim 3 wherein said natural polymer is a cellulosic polymer

5. The tablet-form adhesive or binder of claim 4 wherein said cellulosic polymer comprises methyl cellulose.

6. The tablet-form adhesive or binder of claim 3 wherein said synthetic polymer comprises at least one vinyl ester homopolymer or copolymer, an acrylic polymer, or a mixture thereof.

7. The tablet-form adhesive or binder of claim 1 wherein said tablet further contains adjuvants selected from the group consisting of surfactants; anti-blocking aids and fillers; hardeners; pigments; dyes; reinforcing agents; colloids; plasticizers; cross-linkers; rheology modifiers; and mixtures thereof

8. A process for adhering paper, paperboard, or plastic to a substrate comprising:
a) forming a powder comprising at least one synthetic polymer;
b) dispersing said powder into water to form a stable adhesive dispersion;
c) applying said adhesive dispersion to a paper or paperboard;
d) contacting said paper, paperboard or plastic to a substrate;
e) applying pressure at contact point(s); and
f) drying said adhesive dispersion.

9. The process of claim 8 wherein said drying occurs by means of absorption into the substrate, air-drying, forced air drying, heated air, oven, microwaves, UV radiation, IR radiation, or a mixture thereof.

10. The process of claim 8 wherein said powder comprising at least one polymer is formed into a tablet prior to dispersion into water.

11. The process of claim 8 wherein said polymer comprises a vinyl ester polymer or copolymer.

12. The process of claim 11 wherein said vinyl ester polymer or copolymer comprises a vinyl acetate/ethylene copolymer, a poly vinyl alcohol polymer, a polyvinyl acetate polymer, or a mixture thereof.

13. The process of claim 8 wherein said powder further comprises adjuvants selected from the group consisting of surfactants which may aid in redispersion; anti-blocking aids and fillers such as aluminum silicates, kaolin, talc, diatomaceous earth, calcium carbonate, and magnesium hydrosilicate; hardeners; pigments; dyes; reinforcing agents such as fibers of plastic or glass, carbon, and graphite; colloids; plasticizers; cross-linkers; rheology modifiers; and mixtures thereof

14. The process of claim 8 wherein said substrate comprises a paper or paper board.

15. The process of claim 8 wherein said substrate comprises wood, leather, metal; glass, ceramics, concrete, fabric, textiles, plastics, vinyl, carpet, upholstery, and non-wovens.

16. The process of claim 8 wherein said powder is dispersed into water in the mixing head of a spray nozzle, wherein said powder is dispersed in less than 2 seconds and immediately applied to the substrate.

17. The process of claim 8 further comprising the step of combining one or more adjuvants with the stable adhesive dispersion in step b), prior to application in step c).

18. The process of claim 17 wherein said adjuvants comprise solids, liquids, or a mixture thereof.

19. A process for binding fibers or pigments comprising:
a) a forming a powder comprising at least one synthetic polymer;
b) dispersing said powder into water to form a stable binder dispersion;
c) combining said binder dispersion with fibers and/or pigments;
d) drying said binder dispersion.
